# FASCICULE DE BREVET EUROPEEN

(11) **EP 2 785 981 B1**
(45) Date de publication et mention de la délivrance du brevet: **18.11.2015**
(21) Numéro de dépôt: 12806589.3
(22) Date de dépôt: 28.11.2012
(51) Int. Cl.: F01D 15/08, F01D 15/10, F02C 7/22, F02C 7/32

(54) **TURBOMACHINE COMPORTANT UNE POMPE D'ALIMENTATION EN CARBURANT À ACTIVATION ÉLECTRIQUE ET PROCÉDÉ D'ALIMENTATION EN CARBURANT D'UNE TURBOMACHINE**
TURBINENMOTOR MIT ELEKTRISCH AKTIVIERBARER KRAFTSTOFFZUFUHRPUMPE UND KRAFTSTOFFZUFUHRVERFAHREN FÜR TURBINENMOTOR
TURBINE ENGINE COMPRISING AN ELECTRICALLY ACTIVATED FUEL SUPPLY PUMP, AND TURBINE ENGINE FUEL SUPPLY METHOD

(30) Priorité: 29.11.2011 FR 1160887
(43) Date de publication de la demande: 08.10.2014
(73) Titulaire: Turbomeca, 64510 Bordes (FR)
(72) Inventeur: LINDEMAN, Jean, F-64110 Jurancon (FR); BENEZECH, Philippe, Jean, René, Marie, F-64160 Morlaas (FR); FREALLE, Jean-luc, Charles, Gilbert, F-64000 Pau (FR); MOINE, Bertrand, F-64290 Gan (FR)
(74) Mandataire: Gevers France
(86) Numéro de dépôt international: PCT/FR2012/052742
(87) Numéro de publication internationale: WO 2013/098498

(56) Documents cités:
- EP-A1- 2 239 440
- WO-A2-00/46488
- DE-A1- 19 630 792
- JP-A- 2001 271 656
- US-A- 1 343 666
- US-A- 1 364 488
- US-A- 2 949 731

## Description

La présente invention concerne le domaine de l'alimentation en carburant des turbomachines d'aéronef, en particulier, des turbomoteurs d'hélicoptère.

Les documents WO00/46488 et EP2239440A1 présentent des turbomachines d'aéronef de l'art antérieur.

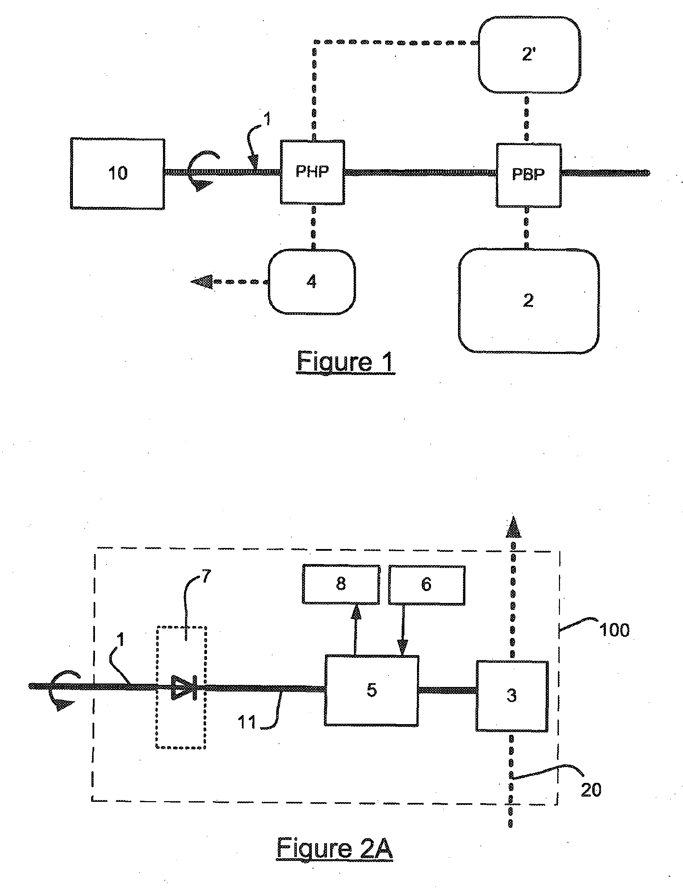

En référence à la figure 1, un turbomoteur d'hélicoptère comporte de manière classique une pompe principale haute pression PHP qui prélève du carburant dans un réservoir haute capacité 2 de l'hélicoptère pour le délivrer à des doseurs 4 du turbomoteur. La pompe haute pression PHP est du type volumétrique et est montée sur un arbre du turbomoteur 1 pour délivrer un débit de carburant qui est fonction de la vitesse à laquelle est entraîné l'arbre du turbomoteur 1. De manière classique, l'arbre du turbomoteur 1 est entraîné par un boîtier d'accessoires 10 de la turbomachine, connu de l'homme du métier sous sa désignation anglaise « gear box ». De manière connue, le turbomoteur comporte en outre une pompe auxiliaire basse pression PBP qui est montée avec la pompe haute pression PHP sur l'arbre du turbomoteur 1 comme représenté sur la figure 1.

Toujours en référence à la figure 1, le turbomoteur comporte traditionnellement un bloc filtre 2' qui comprend de manière classique un filtre de carburant, une cartouche filtrante, une cloche et un by-pass (commutateur). Un tel bloc filtre 2' permet de purifier le carburant avant qu'il soit injecté dans la chambre de combustion du turbomoteur.

Lorsque le filtre de carburant ou la cartouche filtrante du bloc filtre 2' doivent être remplacés, le carburant est drainé du bloc filtre 2' et de l'air pénètre dans le bloc filtre 2'. Pour allumer le turbomoteur, il est nécessaire de remplir de nouveau le bloc filtre 2' avec du carburant. Les pompes de carburant PBP, PHP ne sont d'aucun secours étant donné qu'elles sont solidaires de l'arbre de turbomoteur 1. Lors du remplacement du filtre, de l'air pénètre dans le circuit de carburant ce qui peut conduire à la vidange complète, par gravité, de la canalisation d'alimentation située entre le réservoir de carburant et le turbomoteur. Lorsque le turbomoteur est arrété, les pompes de carburant PBP, PHP demeurent inactives. De manière connue, pour éliminer cet inconvénient, un hélicoptère comporte une pompe d'amorçage, appelée également « pompe de gavage », indépendante du turbomoteur, qui permet de faire monter du carburant depuis le réservoir de carburant 2, situé en partie inférieure de l'hélicoptère, vers le turbomoteur, situé en partie supérieure de l'hélicoptère. La pompe d'amorçage permet de remplir en carburant le bloc filtre 2' et la canalisation d'alimentation pour autoriser le démarrage du turbomoteur.

Afin d'alléger la masse d'un hélicoptère et de diminuer sa complexité, il a été proposé de supprimer la pompe d'amorçage de l'hélicoptère. Pour remplir le bloc filtre 2' de carburant, il est alors nécessaire de mettre en oeuvre une étape de maintenance, par exemple au moyen d'une pompe à main, nécessitant une immobilisation de l'hélicoptère ce qui présente un inconvénient.

Afin d'éliminer au moins certains de ces inconvénients, l'invention vise à proposer un module de pompage en carburant pour un turbomoteur, et plus généralement pour une turbomachine, qui permette un démarrage rapide du turbomoteur indépendamment de la quantité de carburant présente dans le bloc filtre et dans la canalisation d'alimentation.

A cet effet, l'invention concerne une turbomachine pour aéronef conformément à la revendication 1 comportant un arbre de turbomachine et un module de pompage comprenant :
- un arbre de pompage, relié à l'arbre de turbomachine,
- une pompe d'alimentation en carburant de la turbomachine, montée sur ledit arbre de pompage, adaptée pour délivrer un débit de carburant en fonction de la vitesse de rotation de l'arbre de turbomachine et
- un dispositif électrique, monté sur ledit arbre de pompage, adapté, selon un premier mode de fonctionnement, pour entraîner ledit arbre de pompage en rotation pour actionner la pompe d'alimentation et, selon un deuxième mode de fonctionnement, pour être entraîné en rotation par ledit arbre de pompage pour alimenter électriquement un équipement de la turbomachine.

Le dispositif électrique permet de manière avantageuse de démarrer la turbomachine sans tenir compte du niveau de remplissage en carburant de la canalisation d'alimentation et du bloc filtre au moment précédent le démarrage, la pompe d'alimentation pouvant être alimentée préalablement, lorsque la turbomachine est arrêtée. La durée de maintenance pour changer un filtre de carburant du bloc filtre peut ainsi être réduite, aucun remplissage manuel ne devant être mis en oeuvre. En outre, grâce à l'invention, on peut amorcer le démarrage de la turbomachine de manière rapide et fiable, l'amorçage étant découplé du démarrage et de la phase d'allumage. L'invention s'applique plus particulièrement à un hélicoptère ne comportant pas de pompe d'alimentation en carburant, c'est-à-dire, de pompe de gavage.

Le module de pompage comporte des moyens de couplage/découplage adaptés pour découpler l'arbre de turbomachine et l'arbre de pompage selon le premier mode de fonctionnement et pour les coupler selon le deuxième mode de fonctionnement.

Ainsi, les moyens de couplage/découplage permettent avantageusement de rendre indépendant l'activation de la pompe de la rotation de l'arbre de turbomachine. La pompe peut avantageusement être activée sans entraîner l'arbre de turbomachine.

De préférence, les moyens de couplage/découplage sont configurés pour coupler l'arbre de turbomachine et l'arbre de pompage lorsque la vitesse de rotation de l'arbre de turbomachine est supérieure ou égale à la vitesse de rotation de l'arbre de pompage. Ainsi, on garantit un entraînement fiable, en particulier en vol, de la pompe d'alimentation en carburant tout en protégeant l'arbre de turbomachine.

De préférence, les moyens de couplage/découplage sont passifs ce qui limite leur coût et augmente leur fiabilité. De manière préférée, les moyens de couplage/découplage se présentent sous la forme d'une roue libre.

De manière préférée, la turbomachine comporte un régulateur numérique de la turbomachine qui est adapté pour commander le mode de fonctionnement du dispositif électrique. De préférence, la turbomachine comporte un équipement électrique relié au dispositif électrique pour être alimenté par ce dernier lorsque l'arbre de turbomachine et l'arbre de pompage sont couplés. Ainsi, un régulateur numérique, par exemple, du type FADEC peut commander et être alimenté par le dispositif électrique.

De préférence, l'invention vise un turbomoteur pour hélicoptère comme type particulier de turbomachine.

L'invention concerne également un procédé conformément à la revendication 11 d'alimentation en carburant d'une turbomachine pour aéronef comportant un arbre de turbomachine et un module de pompage comprenant un arbre de pompage, relié à l'arbre de turbomachine, une pompe d'alimentation en carburant de la turbomachine, montée sur ledit arbre de pompage, adaptée pour délivrer un débit de carburant en fonction de la vitesse de rotation de l'arbre de turbomachine et un dispositif électrique, monté sur ledit arbre de pompage, procédé dans lequel :
- préalablement ou concomitamment à une phase de démarrage de la turbomachine, le dispositif électrique entraîne en rotation l'arbre de pompage pour actionner la pompe d'alimentation lors d'une phase d'amorçage ;
- après démarrage de la turbomachine, le dispositif électrique est entraîné en rotation par l'arbre de pompage pour alimenter électriquement un équipement de la turbomachine.

Grâce au procédé selon l'invention, on utilise de l'énergie électrique pour alimenter la pompe d'alimentation lors de la phase d'amorçage et on en génère lorsque la turbomachine est démarrée. Le dispositif électrique selon l'invention remplit ainsi une double fonction.

De préférence, l'arbre de turbomachine et l'arbre de pompage sont découplés lors du démarrage de la turbomachine et couplés après démarrage de la turbomachine. Ainsi, la turbomachine est protégée lorsqu'elle est arrêtée étant donné que l'arbre de turbomachine est désolidarisé de l'arbre de pompage, aucun couple n'étant reçu par l'arbre de turbomachine.

De préférence, l'arbre de turbomachine et l'arbre de pompage sont couplés lorsque l'arbre de turbomachine atteint une vitesse de rotation supérieure à la vitesse de rotation de l'arbre de pompage. Ainsi, lorsque le démarrage de la turbomachine est effectif, la pompe est entraînée par l'arbre de turbomachine.

De préférence encore, l'aéronef étant apte à voler à partir d'une vitesse seuil de l'arbre de turbomachine, l'arbre de turbomachine et l'arbre de pompage sont couplés à une vitesse de couplage inférieure à ladite vitesse seuil. Ainsi, on limite les risques d'accident en cas de dysfonctionnement lors du couplage, un éventuel dysfonctionnement ne pouvant survenir qu'au sol.

De manière préférée, la phase d'amorçage et la phase de démarrage sont séparées par une temporisation, la pompe d'alimentation pouvant ainsi être activée de manière indépendante pour amorcer le circuit d'alimentation préalablement au démarrage de la turbomachine. A titre d'exemple, on peut ainsi remplir un bloc filtre de la turbomachine de manière indépendante et démarrer la turbomachine ultérieurement.

L'invention sera mieux comprise à la lecture de la description qui va suivre, donnée uniquement à titre d'exemple, et se référant aux dessins annexés sur lesquels :
- la figure 1 est une représentation schématique d'une turbomachine selon l'art antérieur (déjà commentée) ;
- la figure 2A est une représentation d'une première forme de réalisation d'un module de pompage selon l'invention,
- la figure 2B est une représentation d'une deuxième forme de réalisation d'un module de pompage selon l'invention,
- la figure 2C est une représentation d'une troisième forme de réalisation d'un module de pompage selon l'invention,
- la figure 3A est une représentation schématique d'une première forme de réalisation d'une turbomachine avec un module de pompage selon l'invention ;
- la figure 3B est une représentation schématique d'une deuxième forme de réalisation d'une turbomachine avec un module de pompage selon l'invention ;
- la figure 3C est une représentation schématique d'une troisième forme de réalisation d'une turbomachine avec un module de pompage selon l'invention ;
- la figure 4A est une représentation schématique du fonctionnement en mode moteur du module de pompage de la figure 2A ;
- la figure 4B est une représentation schématique du fonctionnement en mode générateur du module de pompage de la figure 2A ;
- la figure 5 est une représentation schématique d'une première forme de réalisation concrète d'un module de pompage selon l'invention ;
- la figure 6 est une représentation schématique d'une deuxième forme de réalisation concrète d'un module de pompage selon l'invention ; et
- les figures 7 à 10 représentent la vitesse de rotation de l'arbre d'entraînement de la turbomachine (trait plein) et la vitesse de rotation de l'arbre de pompage (trait discontinu) en fonction de la commande du dispositif électrique et de la commande du démarrage de la turbomachine.

Il faut noter que les figures exposent l'invention de manière détaillée pour mettre en oeuvre l'invention, lesdites figures pouvant bien entendu servir à mieux définir l'invention le cas échéant.

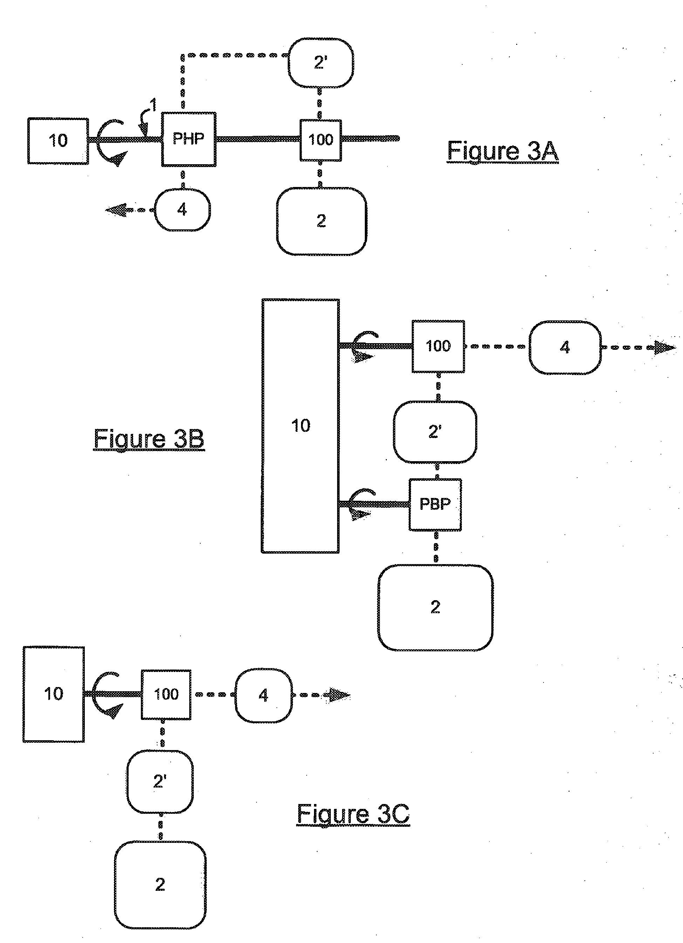

Une première forme de réalisation d'une turbomachine selon l'invention est représentée en référence à la figure 3A, la turbomachine comporte un arbre rotatif 1 qui est entraîné en rotation, dans cet exemple, par un boîtier d'accessoires 10 de la turbomachine, plus connu de l'homme du métier sous sa désignation anglaise « gearbox ». Il va de soi que l'invention peut s'appliquer à tout arbre rotatif de la turbomachine. Lorsque la turbomachine est démarrée, le boîtier d'accessoires 10 entraîne l'arbre de turbomachine 1 en rotation comme représenté par la flèche de la figure 3A.

De manière classique, la turbomachine de la figure 3A comporte un réservoir de carburant 2 de haute capacité et un bloc filtre 2' tel que présenté précédemment qui comporte, à titre d'exemple, un filtre de carburant, une cartouche filtrante, une cloche et un by-pass (commutateur). La turbomachine comporte de manière classique des doseurs 4 adaptés pour distribuer le carburant issu du réservoir 2 dans la turbomachine. Dans cet exemple, les doseurs 4 sont reliés au réservoir par une canalisation d'alimentation.

Pour permettre l'acheminement du carburant depuis le réservoir 2 jusqu'aux doseurs 4, la turbomachine comporte en outre une ou plusieurs pompes d'alimentation. A titre d'exemple, en référence à la figure 3A, la turbomachine comporte une pompe haute pression PHP, telle que présentée précédemment, adaptée pour acheminer du carburant depuis le bloc filtre 2' vers les doseurs 4 mais également un module de pompage 100 adapté pour acheminer du carburant depuis le réservoir 2 vers le bloc filtre 2'.

Autrement dit, dans cette première forme de réalisation illustrée à la figure 3A, la pompe basse pression PBP de la turbomachine de la figure 1 selon l'art antérieur est remplacée par un module de pompage 100 selon l'invention.

Il va de soi que le module de pompage 100 peut se substituer en lieu et place de toute pompe d'alimentation en carburant, quelle soit haute pression (PHP) ou basse pression (PBP), et ce, dans tout type de configuration de la turbomachine. A titre d'exemple, la figure 3B représente une deuxième configuration d'une turbomachine dans laquelle le module de pompage 100 se substitue à une pompe d'alimentation basse pression pour une turbomachine comportant deux pompes entraînées par des arbres distincts de la turbomachine. Il va de soi que le module de pompage 100 selon l'invention pourrait également remplacer la pompe haute pression PHP.

De manière similaire, le module de pompage 100 selon l'invention peut se substituer à une pompe d'alimentation d'une turbomachine comportant une unique pompe d'alimentation comme représenté à la figure 3C.

### - Module de pompage 100

Une première forme de réalisation d'un module de pompage 100 est représentée en référence à la figure 2A. Le module de pompage 100 comporte un arbre de pompage 11 sur laquelle sont montés une pompe d'alimentation 3 et un dispositif électrique 5 comme représenté sur la figure 2A, l'arbre de pompage 11 étant relié à l'arbre de turbomachine 1 par des moyens de couplage/découplage 7.

### - Pompe d'alimentation 3

La pompe d'alimentation 3 est activée lors de la rotation de l'arbre de pompage 11 sur lequel elle est montée. De manière préférée, la pompe d'alimentation 3 est une pompe volumétrique qui délivre, dans une conduite d'alimentation 20, un débit de carburant qui est fonction de la vitesse de rotation de l'arbre de pompage 11. De préférence, la conduite d'alimentation 20 relie de manière fluidique un réservoir haute capacité 2 à un bloc filtre 2' de la turbomachine.

### - Dispositif électrique 5

Le dispositif électrique 5 est adapté, selon un premier mode de fonctionnement, pour entraîner l'arbre de pompage 11 en rotation. Par la suite, ce premier mode de fonctionnement du dispositif électrique 5 est désigné « mode de fonctionnement moteur ». Le dispositif électrique 5 est par ailleurs adapté, selon un deuxième mode de fonctionnement, pour prélever l'énergie mécanique sur l'arbre de pompage 11 afin d'alimenter au moins un équipement électrique 8 de la turbomachine. Par la suite, ce deuxième mode de fonctionnement du dispositif électrique 5 est désigné « mode de fonctionnement générateur ».

A titre d'exemple, le dispositif électrique 5 est relié au réseau électrique de démarrage de l'aéronef sur lequel est montée la turbomachine, en particulier, celui d'un hélicoptère. De manière préférée, le dispositif électrique 5 est adapté pour se connecter à un réseau électrique alimenté à une tension de réseau de bord.

Ainsi, de manière avantageuse, le dispositif électrique 5 permet d'activer la pompe d'alimentation 3 lorsque l'arbre de turbomachine 1 n'est pas entraîné en rotation, c'est-à-dire, lorsque la turbomachine est arrêtée. Une fois la turbomachine démarrée, le dispositif électrique 5 peut prélever de la puissance mécanique sur l'arbre de pompage 11 pour la convertir en énergie électrique et alimenter un équipement électrique 8 de la turbomachine.

A titre d'exemple, le dispositif électrique 5 est relié électriquement à un régulateur numérique 6 de la turbomachine, plus connu sous son acronyme anglais FADEC, permettant de commander le mode de fonctionnement de la turbomachine. De préférence, le régulateur numérique 6 est relié au dispositif électrique 5 par l'intermédiaire d'une interface de puissance électrique. Le régulateur numérique 6 peut ainsi commander le mode de fonctionnement du dispositif électrique 5 et être alimenté par celui-ci.

### - Module de couplage/découplage 7

Le module de pompage 100 comporte des moyens de couplage/découplage 7 adaptés pour coupler l'arbre de turbomachine 1 avec l'arbre de pompage 11 lorsque le dispositif électrique 5 fonctionne selon le mode générateur et pour les découpler lorsque le dispositif électrique 5 fonctionne selon le mode moteur. Ainsi, de manière avantageuse, lorsque le dispositif électrique 5 entraîne l'arbre de pompage 11, l'arbre de turbomachine 1 n'est pas entraîné ce qui protège l'arbre de la turbomachine 1 et les éléments mécaniques d'entraînement de l'arbre de turbomachine 1, par exemple, une boîte d'engrenages 10.

De manière préférée, les moyens de couplage/découplage 7 se présentent sous la forme d'une roue libre 7 qui est, de préférence, lubrifiée avec du carburant pour faciliter son entretien. Selon une forme de réalisation préférée, les moyens de couplage/découplage 7 sont configurés pour coupler l'arbre de turbomachine 1 et l'arbre de pompage 11 lorsque la vitesse de rotation de l'arbre de turbomachine 1 est supérieure ou égale à la vitesse de rotation de l'arbre de pompage 11 afin de permettre un entraînement continu de l'arbre de pompage 11.

Selon un aspect préféré, les moyens de couplage/découplage 7 sont passifs de manière à permettre un couplage/découplage automatisé en fonction des vitesses de rotation de l'arbre de turbomachine 1 et de l'arbre de pompage 11. A titre d'exemple, les moyens de découplage 7 se présentent sous la forme d'une roue libre, un embrayage à dépassement ou un dispositif centrifuge, par exemple, hydraulique.

Il va de soi que les moyens de couplage/découplage 7 pourraient également être des moyens actifs. A titre d'exemple, les moyens couplage/découplage actifs se présentent sous la forme d'une boîte de vitesse, un train épicycloïdal ou un crabot.

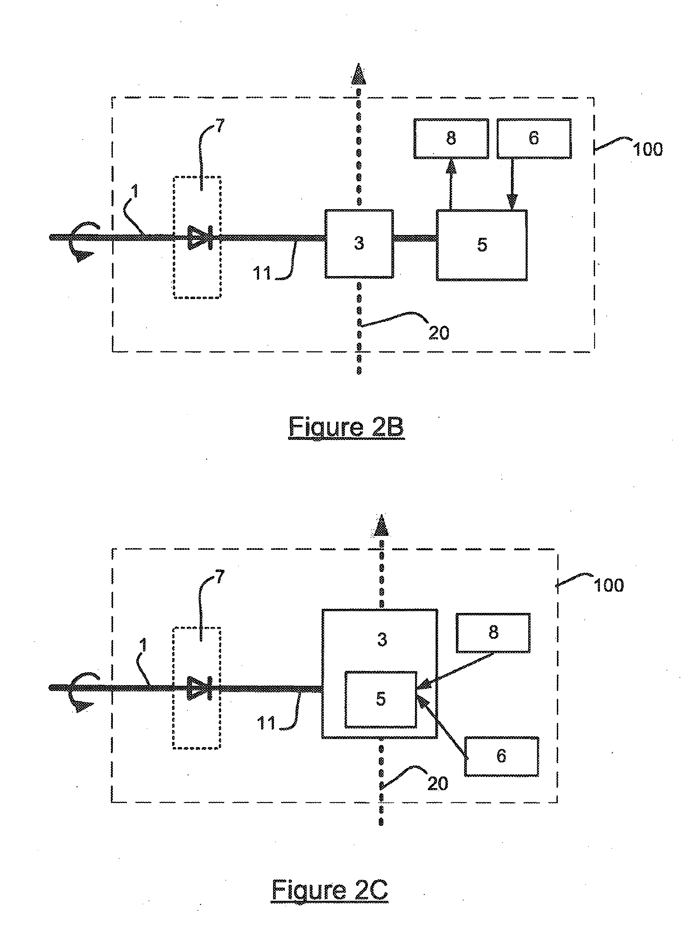

En référence au module de pompage 100 de la figure 2A, le dispositif électrique 5 est monté entre les moyens de couplage/découplage 7 et la pompe d'alimentation 3. Il va de soi que d'autres configurations du module de pompage 100 sont également possibles. A titre d'exemple, la pompe d'alimentation 3 peut être montée entre les moyens de couplage/découplage 7 et le dispositif électrique 5 comme représenté à la figure 2B.

La pompe d'alimentation 3, les moyens de couplage/découplage 7 et le dispositif électrique 5 ont été précédemment présentés sous la forme d'éléments séparés mais il va de soi qu'ils peuvent être regroupés tous ensemble ou par modules. A titre d'exemple, la pompe d'alimentation 3 intègre le dispositif électrique 5 dans le module de pompage 100 représenté à la figure 2C.

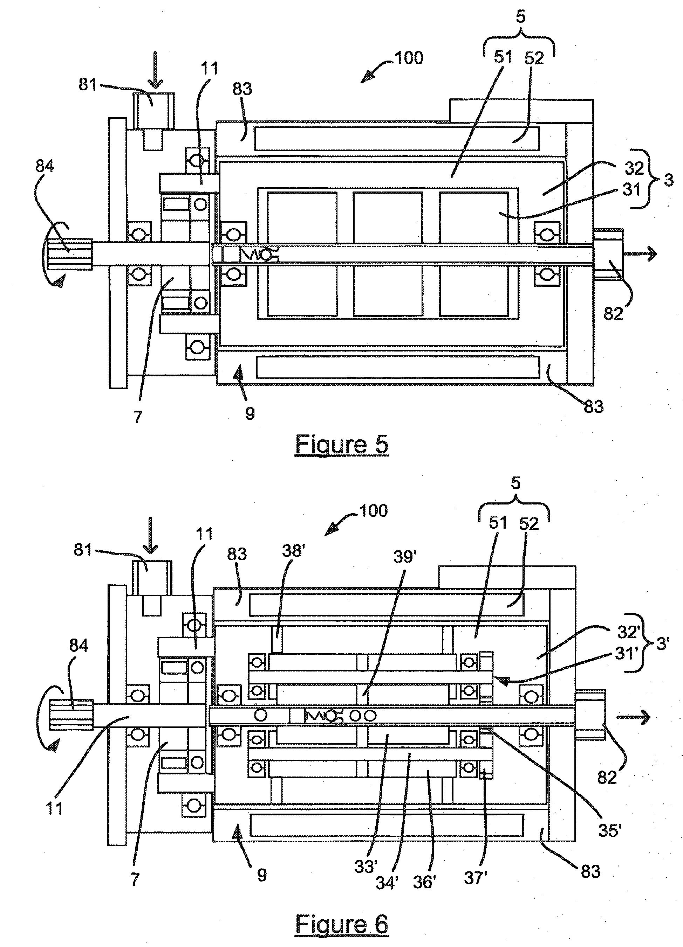

A titre d'exemple, il est représenté sur les figures 5 et 6 deux formes de réalisations concrètes d'un module de pompage 100 selon l'invention intégrant une pompe d'alimentation 3, un dispositif électrique 5 et des moyens de couplage/découplage 7.

### Module de pompage de la figure 5

Comme représenté sur la figure 5, le module de pompage 100 comporte un boîtier structural 9 dans lequel sont ménagées une bride d'aspiration 81, pour aspirer du carburant depuis le réservoir 2, et une bride de refoulement 82, pour alimenter par exemple un bloc filtre 2' de la turbomachine comme illustré à la figure 2. Le module de pompage 100 comporte une pompe 3 d'alimentation en carburant montée intérieurement au boîtier structural 9. En référence à la figure 5, la pompe 3 comporte une première partie centrale fixe 31, solidaire du boîtier structural 9, comprenant un arbre creux de refoulement relié à la bride de refoulement 82 et une partie mobile 32 montée extérieurement à sa partie centrale fixe 31. La partie mobile 32 de la pompe 3 est montée intérieurement à une couronne extérieure fixe 83 du boîtier structural 9. Autrement dit, le module de pompage 100 comporte de l'intérieur vers l'extérieur depuis son axe central, la partie fixe 31 de la pompe 3, puis une partie mobile 32 de la pompe 3 et enfin une couronne extérieure 83 solidaire du boîtier structural 9.

Le module de pompage 100 comprend un organe de prise de mouvement 84 qui est relié à la partie mobile 32 de la pompe 3 via une roue libre 7 assurant le couplage/découplage comme représenté sur la figure 5. Dans cet exemple, l'arbre de turbomachine 1 du boîtier d'accessoires 10 est adapté pour se connecter à l'organe de prise de mouvement 84 pour entraîner la partie mobile 32. Autrement dit, la partie mobile 32 correspond à l'arbre de pompage 11 tel que présenté précédemment, la roue libre 7 étant adaptée pour coupler/découpler l'arbre de turbomachine 1, relié à l'organe de prise de mouvement 84, et l'arbre de pompage 11, solidaire de la pompe 3.

La rotation de la partie mobile 32 de la pompe 3 permet avantageusement d'aspirer du carburant depuis la bride d'aspiration 81 vers la bride de refoulement 82. La pompe d'alimentation 3 peut être du type Gérotor, engrenages, anneau liquide/canaux latéraux, lobes, à vis ou autres. Dans cet exemple, la roue libre 7 est une roue libre à rouleaux.

La partie mobile 32 de la pompe 3 comporte à sa périphérie extérieure des éléments de rotor 51 tandis que la périphérie intérieure de la couronne extérieure fixe 83 du boîtier structural 9 comporte des éléments de stator 52 de manière à former un dispositif électrique 5 permettant l'entraînement de la partie mobile 32 de la pompe 3 (fonctionnement moteur) ou la récupération d'énergie de la rotation de la partie mobile 32 de la pompe 3 (fonctionnement générateur).

L'intégration du dispositif électrique 5 à la pompe 3 permet de diminuer l'encombrement et la masse du module de pompage 100.

### Module de pompage de la figure 6

La figure 6 illustre une forme de réalisation préférée du module de pompage 100 de la figure 5. Dans cet exemple, la pompe d'alimentation 3 est une pompe à vis avec trois vis synchronisées. Comme illustré à la figure 6, la pompe d'alimentation est une pompe à vis 3' comprenant une partie centrale fixe 31' et une partie extérieure mobile 32'. La pompe d'alimentation 3' comporte avantageusement deux groupes de vis à pas inversés de manière à compenser les efforts radiaux du carburant sur les vis.

De manière plus précise, en référence à la figure 6, la pompe d'alimentation à vis 3' comporte une vis centrale 33' montée intérieurement à un arbre satellite 34' monté sur l'arbre creux de refoulement relié à la bride de refoulement 82 via un pignon de synchronisation centrale 35'. La pompe d'alimentation à vis 3' comporte en outre des vis satellites 36' montées sur l'arbre satellite 34' via des pignons de synchronisation satellite 37' comme représenté à la figure 6.

Dans cet exemple, la partie mobile 32' de la pompe à vis 3' comporte des canaux d'alimentation radiaux 38' et les vis 33', 36' comportent des canaux de refoulement 39'. Lorsque la pompe à vis 3' est activée, du carburant circule depuis la bride d'alimentation 81 vers les canaux d'alimentation radiaux 38' de la partie mobile 32' de la pompe à vis 3', vers les canaux de refoulement 39' des vis 33', 36' pour enfin être conduit dans l'arbre creux de refoulement relié à la bride de refoulement 82.

De manière classique, le module de pompage 100 en carburant comporte également des moyens de fixation à la turbomachine pour permettre l'intégration du dispositif à la turbomachine.

### Mise en oeuvre

Une mise en oeuvre du module de pompage 100 de la figure 3A va être maintenant décrite pour une turbomachine telle que configurée à la figure 2A mais il va de soi que cette description s'applique de manière similaire à toute forme de réalisation du module de pompage et pour toute configuration de turbomachine.

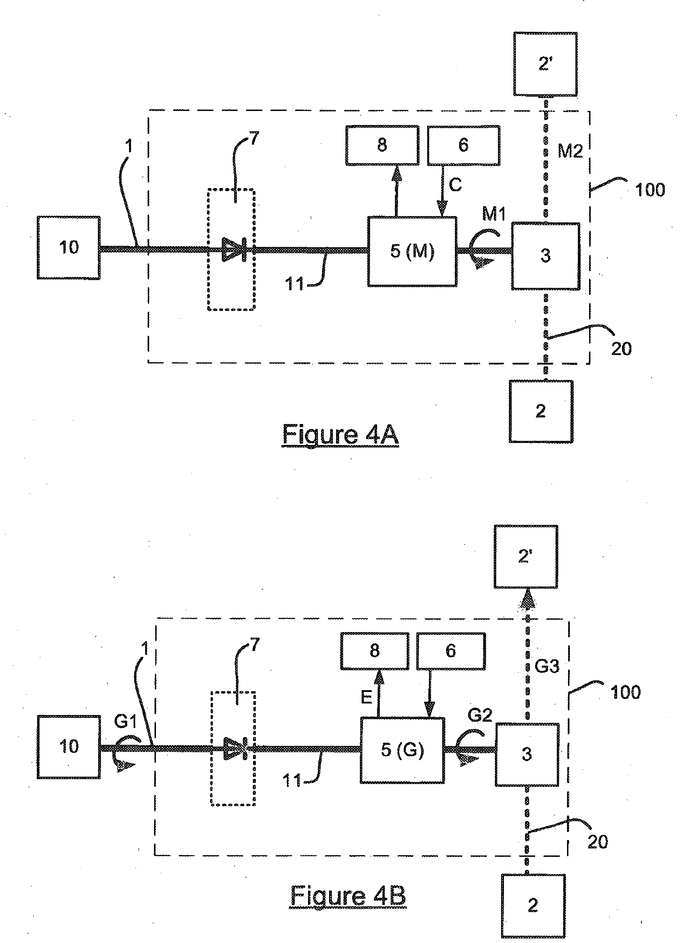

Le fonctionnement du module de pompage 100 va être présenté lorsque le dispositif électrique 5 fonctionne selon le mode moteur (figure 4A) et lorsque le dispositif électrique 5 fonctionne selon le mode générateur (figure 4B).

En référence à la figure 4A, pour démarrer la turbomachine éteinte, le dispositif électrique 5 reçoit un ordre de commande C du régulateur numérique 6 afin que ce dernier fonctionne en mode moteur M. Le dispositif électrique 5 entraîne en rotation l'arbre de pompage 11 (Etape M1) ce qui actionne la pompe d'alimentation 3 qui peut prélever le carburant dans le réservoir 2 pour alimenter en carburant le bloc filtre 2' (Etape M2). Dans cet état, les moyens dé couplage/découplage 7 découplent l'arbre de pompage 11 de l'arbre de turbomachine 1 étant donné que la vitesse de rotation de l'arbre de pompage 11 est plus élevée que celle de l'arbre de turbomachine 1.

Ainsi, l'arbre de turbomachine 1 n'est pas entraîné en rotation ce qui protège le boîtier d'accessoires 10 de la turbomachine arrêtée.

Ainsi, lors du démarrage, c'est le dispositif électrique 5 qui actionne la pompe d'alimentation 3 et non le boîtier d'accessoires 10 de la turbomachine arrêtée. Un tel dispositif électrique 5 est avantageux car il présente un faible encombrement et permet de démarrer la turbomachine sans tenir compte du niveau de carburant dans le bloc filtre 2'. La pompe d'alimentation 3 peut être actionnée sur demande, indépendamment de l'état de marche de la turbomachine ce qui permet d'alimenter en carburant la turbomachine à tout instant. Cela est particulièrement avantageux pour remplacer des filtres à carburant de la turbomachine comme cela sera détaillé par la suite lors de la présentation des profils de commande de l'activation du dispositif électrique 5 et du démarrage de la turbomachine.

En référence à la figure 4B, une fois la turbomachine démarrée, le boîtier d'accessoires 10 de la turbomachine entraîne en rotation l'arbre de turbomachine 1 (Etape G1). Dans cet état, les moyens de couplage/découplage 7 couplent l'arbre de pompage 11 à l'arbre de turbomachine 1 étant donné que la vitesse de rotation de l'arbre de pompage 11 est moins élevée que celle de l'arbre de turbomachine 1. Ainsi, la rotation de l'arbre de turbomachine 1 entraîne celle de l'arbre de pompage 11 (Etape G2) ce qui actionne la pompe d'alimentation 3 qui peut prélever le carburant dans le réservoir 2 pour alimenter en carburant le bloc filtre 2' (Etape G3). De préférence encore, le dispositif électrique 5 reçoit un ordre de commande du régulateur numérique 6 afin que ce dernier fonctionne en mode générateur G. Le dispositif électrique 5 prélève de la puissance sur l'arbre de pompage 11 et la convertit en énergie électrique pour alimenter un équipement électrique 8 de la turbomachine.

### Profils de commande

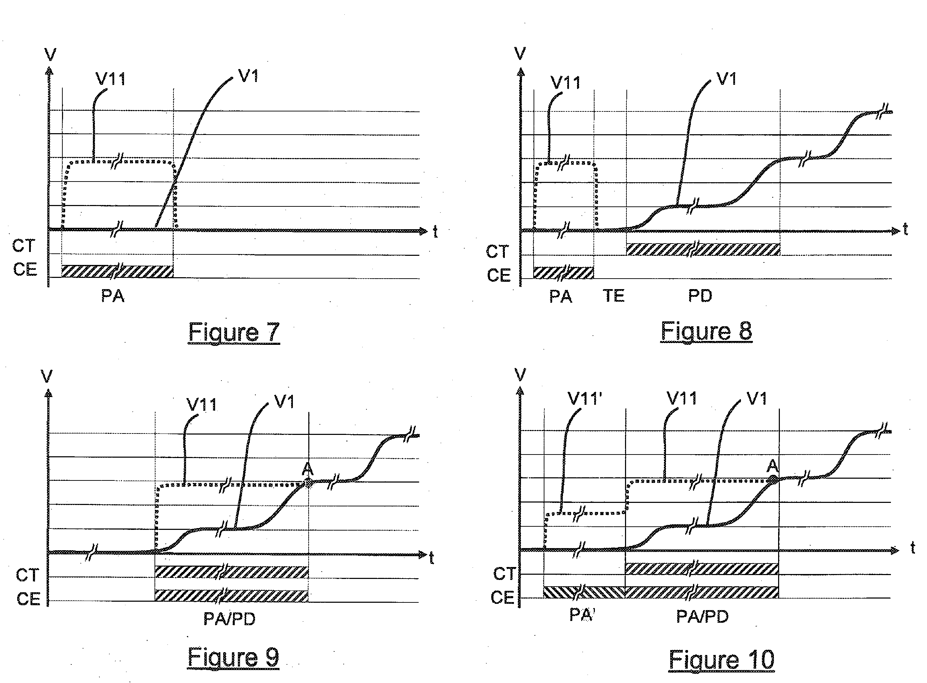

Les figures 7 à 10 présentent différents profils de commande d'activation du dispositif électrique 5 du module de pompage 100 (CE) et du démarrage de la turbomachine (CT). Par commande CE du dispositif électrique 5, on entend un entraînement de la pompe d'alimentation 3 par le dispositif électrique 5 fonctionnant en mode moteur. Sur ces figures, les vitesses de rotation V de l'arbre de turbomachine V1 (trait continu) et de l'arbre de pompage V11 (trait discontinu) sont représentées en fonction des profils de commande du dispositif électrique 5 et de la turbomachine.

La figure 7 représente une activation du dispositif électrique 5 (CE=1) lorsque la turbomachine est arrêtée (CT=0). Lors de cette commande, seul l'arbre de pompage 11 est entraîné ce qui permet d'alimenter la pompe 3 pour, par exemple, remplir en carburant le bloc filtre 2' après remplacement de la cartouche filtrante. Le remplissage en carburant du bloc filtre 2' est automatique et ne nécessite pas d'étape de maintenance imposant une immobilisation de l'aéronef sur lequel est monté la turbomachine. Par la suite, le profil de commande de la figure 7 est désigné phase d'amorçage PA.

La figure 8 représente la phase d'amorçage PA de la figure 7 suivie d'une phase de démarrage PD dans laquelle la turbomachine est allumée (CT=1). En référence à la figure 8, le dispositif électrique 5 n'est pas activé (CE=0) lors de la phase de démarrage PD et les moyens de couplage/découplage 7 couplent l'arbre de turbomachine 1 à l'arbre de pompage 11 étant donné que la vitesse de l'arbre de turbomachine V1 est supérieure à celle de l'arbre de pompage V11. Ainsi, les courbes de vitesse V1, V11 des arbres 1, 11 sont confondues au cours de la phase de démarrage comme représenté sur la figure 8. Dans cet exemple, toujours en référence à la figure 8, la phase d'amorçage PA est suivie d'une temporisation TE puis de la phase de démarrage PD. Ainsi, la phase d'amorçage PA est une phase préliminaire au démarrage et vise à garantir que le bloc filtre 2' est alimenté en carburant avant de commander un démarrage effectif de la turbomachine. Il va de soi que la phase d'amorçage PA pourrait être directement suivie de la phase de démarrage PD.

La figure 9 représente une phase d'amorçage PA et une phase de démarrage PD concomitantes. Dans cet exemple, la turbomachine est allumée (CT=1) en même temps que le dispositif électrique 5 (CE=1). Au cours de cette phase, la vitesse V11 de l'arbre de pompage 11 augmente rapidement de manière à permettre une activation de la pompe d'alimentation 3. Au contraire, la vitesse V1 de l'arbre de turbomachine 1 augmente lentement de manière à permettre une augmentation de la vitesse de la turbomachine par paliers (démarrage, accélération, ralenti au sol, etc.).

Au début du profil de commande, la vitesse V1 de l'arbre de turbomachine 1 est inférieure à celle de l'arbre de pompage 11. Les moyens de couplage/découplage 7 découplent l'arbre de turbomachine 1 de l'arbre de pompage 11. Lorsque la vitesse V1 de l'arbre de turbomachine 1 égale ou dépasse la vitesse V11 de l'arbre de pompage 11, les moyens de couplage/découplage 7 couplent l'arbre de turbomachine 1 et l'arbre de pompage 11 en un point de couplage référencé A sur la figure 9.

De manière avantageuse, le temps de démarrage de la turbomachine est réduit lorsque les phases d'amorçage PA et de démarrage PD sont concomitantes.

De manière préférée, la vitesse de rotation V11 de l'arbre de pompage 11 est adaptée pour correspondre à une vitesse de rotation de la turbomachine inférieure à son régime de vol. Ainsi, le point de couplage A intervient nécessairement lorsque l'aéronef est encore au sol. Cela permet de limiter les risques en cas de défaillance du couplage et augmente ainsi la sécurité.

A titre de variante, en référence à la figure 10, les phases d'amorçage PA et de démarrage PD concomitantes peuvent être précédées d'une phase d'amorçage préliminaire PA' dans laquelle la pompe d'activation 3 est entraînée en rotation par le dispositif électrique 5 à une vitesse de rotation V11' réduite. Une telle phase d'amorçage préliminaire PA' permet une mise en rotation par paliers de vitesse de l'arbre de pompage 11 ce qui favorise un couplage sans heurts de l'arbre de turbomachine 1 et de l'arbre de pompage 11. Il va de soi que la phase d'amorçage préliminaire PA' pourrait également être suivie d'une temporisation TE.

## Revendications

1. Turbomachine pour aéronef comportant un arbre de turbomachine (1) et un module de pompage (100) comprenant :
- Un boîtier structural (9) dans lequel sont ménagées une bride d'aspiration (81), pour aspirer du carburant depuis un réservoir (2), et une bride de refoulement (82),
- un arbre de pompage (11), relié à l'arbre de turbomachine (1),
- une pompe (3) d'alimentation en carburant de la turbomachine, montée sur ledit arbre de pompage (11) et montée intérieurement au boîtier structural (9), adaptée pour délivrer un débit de carburant en fonction de la vitesse de rotation de l'arbre de turbomachine (1), la pompe d'alimentation (3) comportant une première partie centrale fixe (31), solidaire du boîtier structural (9), comprenant un arbre creux de refoulement relié à la bride de refoulement (82) et une partie mobile (32) montée extérieurement à sa partie centrale fixe (31)
- un dispositif électrique (5), monté sur ledit arbre de pompage (11), adapté, selon un premier mode de fonctionnement, pour entraîner ledit arbre de pompage (11) en rotation pour actionner la pompe d'alimentation (3) et, selon un deuxième mode de fonctionnement, pour être entraîné en rotation par ledit arbre de pompage (11) pour alimenter électriquement un équipement (8) de la turbomachine, le dispositif électrique comportant des éléments de rotor (51) montés à la périphérie extérieure de la partie mobile (32) de la pompe d'alimentation (3) et des éléments de stator (52) montés à la périphérie intérieure d'une couronne extérieure fixe (83) du boîtier structural (9) et
- des moyens de couplage/découplage (7) adaptés pour découpler l'arbre de turbomachine (1) et l'arbre de pompage (11) selon le premier mode de fonctionnement et pour les coupler selon le deuxième mode de fonctionnement.

2. Turbomachine selon la revendication 1, dans laquelle, les moyens de couplage/découplage (7) sont configurés pour coupler l'arbre de turbomachine (1) et l'arbre de pompage (11) lorsque la vitesse de rotation (V1) de l'arbre de turbomachine (1) est supérieure ou égale à la vitesse de rotation (V11) de l'arbre de pompage (11).

3. Turbomachine selon l'une des revendications 1 à 2, dans laquelle, les moyens de couplage/découplage (7) sont passifs.

4. Turbomachine selon la revendication 3, dans laquelle, les moyens de couplage/découplage (7) se présentent sous la forme d'une roue libre.

5. Turbomachine selon l'une des revendications 1 à 4, dans laquelle, la turbomachine comporte un régulateur numérique (6) adapté pour commander le mode de fonctionnement du dispositif électrique (5).

6. Turbomachine selon l'une des revendications 1 à 5, dans lequel, la turbomachine comporte un équipement électrique (8) relié au dispositif électrique (5) pour être alimenté par ce dernier lorsque l'arbre de turbomachine (1) et l'arbre de pompage (11) sont couplés.

7. Turbomachine selon l'une des revendications 1 à 6, dans laquelle, le module de pompage (100) comprend un organe de prise de mouvement (84) relié à la partie mobile (32) de la pompe d'alimentation (3).

8. Turbomachine selon la revendication 7, dans laquelle, la turbomachine comportant un boîtier d'accessoires (10) avec un arbre, l'arbre du boîtier d'accessoires (10) est connecté à l'organe de prise de mouvement (84).

9. Turbomachine selon l'une des revendications 1 à 8, dans laquelle, la pompe d'alimentation (3) est adaptée pour aspirer du carburant depuis la bride d'aspiration (81) vers la bride de refoulement (82).

10. Turbomoteur pour hélicoptère selon l'une des revendications 1 à 9.

11. Procédé d'alimentation en carburant d'une turbomachine selon l'une des revendications 1 à 10, procédé dans lequel :
- préalablement ou concomitamment à une phase de démarrage de la turbomachine (PD), le dispositif électrique (5) entraîne en rotation l'arbre de pompage (11) pour actionner la pompe d'alimentation (3) lors d'une phase d'amorçage (PA) ;
- après démarrage de la turbomachine, le dispositif électrique (5) est entraîné en rotation par l'arbre de pompage (11) pour alimenter électriquement un équipement de la turbomachine (8).

12. Procédé selon la revendication précédente, dans lequel, l'arbre de turbomachine (1) et l'arbre de pompage (11) sont découplés lors du démarrage de la turbomachine et couplés après démarrage de la turbomachine,

13. Procédé selon la revendication précédente, dans lequel, l'arbre de turbomachine (1) et l'arbre de pompage (11) sont couplés lorsque l'arbre de turbomachine (1) atteint une vitesse de rotation (V1) supérieure à la vitesse de rotation (V11) de l'arbre de pompage (11).

14. Procédé selon la revendication précédente, dans lequel, l'aéronef étant apte à voler à partir d'une vitesse seuil de l'arbre de turbomachine (1), l'arbre de turbomachine (1) et l'arbre de pompage (11) sont couplés à une vitesse de couplage inférieure à ladite vitesse seuil.

15. Procédé selon l'une des revendications 11 à 14, dans lequel, la phase d'amorçage (PA) et la phase de démarrage (PD) sont séparées par une temporisation (TE).

## Patentansprüche

1. Strömungsmaschine eines Luftfahrzeugs, umfassend eine Strömungsmaschinenwelle (1) und ein Pumpenmodul (100), welches umfasst:
- ein strukturelles Gehäuse (9), in dem ein Saugflansch (81) zum Ansaugen von Brennstoff aus einem Reservoir (2) und ein Druckflansch (82) enthalten sind,
- eine mit der Strömungsmaschinenwelle (1) verbundene Pumpenwelle (11),
- eine an der Pumpenwelle (11) und innerhalb des strukturelles Gehäuses (9) montierten Brennstoffpumpe (3) der Strömungsmaschine, die zur Zuführung eines von der Rotationsgeschwindigkeit der Welle (1) abhängigen Brenstoffflusses geeignet ist,
wobei die Brennstoffpumpe (3) einen ersten ortsfesten zentralen Teil (31) umfasst, das einstückig mit dem strukturelles Gehäuse (9) ausgebildet ist und eine hohle Rückflusswelle, die mit dem Druckflansch (82) verbunden ist, und einen außerhalb des ortsfesten zentralen Teils (31) montierten beweglichen Teil (32) umfasst,
- ein an der Pumpenwelle (11) montiertes elektrisches Gerät (5), das gemäß einer ersten Ausführungsform geeignet ist, die Pumpenwelle (11) zu rotieren, um die Brennstoffpumpe (3) zu aktivieren, und gemäß einer zweiten Ausführungsform geeignet ist, von der Pumpenwelle (11) rotiert zu werden, um einem Ausrüstungsgegenstand (8) der Strömungsmaschine Strom zuzuführen, wobei das elektrische Gerät Rotoreemente (51), die am Außenumfang des beweglichen Teils (32) der Brennstoffpumpe (3) montiert sind, und Statorelemente (52), die am Innenumfang einer ortsfesten Außenkrone (83) des strukturelles Gehäuses (9) montiert sind, aufweist, und
- Kopplungs-/Entkopplungsmittel (7), die in einem ersten Ausführungsform zum Entkoppeln der Strömungsmaschinenwelle (1) und der Pumpenwelle (11) geeignet ist, und im zweiten Ausführungsform geeignet ist, sie zu koppeln.

2. Strömungsmaschine nach Anspruch 1, wobei die Kopplungs-/Endkopplungsmittel (7) derart konfiguriert ist, dass sie die Strömungsmaschinenwelle (1) und die Pumpenwelle (11) zu koppeln, wenn die Rotationsgeschwindigkeit (V1) der Strömungsmaschinenwelle (1) höher oder gleich der Rotationsgeschwindigkeit (V11) der Pumpenwelle (11) ist.

3. Strömungsmaschine nach einem der Ansprüche 1 - 2, wobei die Kopplungs-/Entkopplungsmittel (7) passiv sind.

4. Strömungsmaschine nach Anspruch 3, wobei die Kopplungs-/Entkopplungsmittel (7) in Form eines Freilaufs vorliegen.

5. Strömungsmaschine nach einem der Ansprüche 1 - 4, wobei die Strömungsmaschine einen digitalen Regler (6) aufweist, der zur Steuerung des Modus des elektrischen Geräts (5) geeignet ist.

6. Strömungsmaschine nach einem der Ansprüche 1 - 5, wobei die Strömungsmaschine einen mit dem elektrischen Gerät (5) verbundenen elektrischen Ausrüstungsgegenstand (8) aufweist, um von letzterem mit Strom versorgt zu werden, wenn die Welle (1) und die Pumpenwelle (11) gekoppelt sind.

7. Strömungsmaschine nach einem der Ansprüche 1 - 6, wobei das Pumpenmodul (100) ein mit dem beweglichen Teil (32) der Brennstoffpumpe (3) verbundenes Bewegungsübertragungselement (84) aufweist.

8. Strömungsmaschine nach Anspruch 7, wobei die Strömungsmaschine einen Zubehörkasten (10) mit einer Welle aufweist, und wobei die Welle des Kastens (10) mit dem Bewegungsübertragungselement (84) verbunden ist.

9. Strömungsmaschine nach einem der Ansprüche 1 - 8, wobei die Brennstoffpumpe (3) geeignet ist, Brennstoff vom Saugflansch (81) zum Druckflansch (82) zu saugen.

10. Strömungsmaschine eines Hubschraubers nach einem der Ansprüche 1 - 9.

11. Verfahren zur Versorgung einer Strömungsmaschine mit Brennstoff nach einem der Ansprüche 1 - 10, wobei:
- vor oder gleichzeitig mit einer Startphase der Strömungsmaschine (PD) das elektrische Gerät (5) die Pumpenwelle (11) rotiert, um die Brennstoffpumpe (3) in einer Ankurbelphase (PA) zu aktivieren;
- das elektrische Gerät (5) nach dem Start der Strömungsmaschine von der Brennstoffpumpe (11) rotiert wird, um einen Ausrüstungsgegenstand der Strömungsmaschine (8) mit Strom zu versorgen.

12. Verfahren nach dem vorstehenden Anspruch, wobei die Strömungsmaschinenwelle (1) und die Pumpenwelle (11) beim Start der Strömungsmaschine entkoppelt sind und nach dem Start der Strömungsmaschine gekoppelt werden.

13. Verfahren nach dem vorstehenden Anspruch, wobei die Strömungsmaschinenwelle (1) und die Pumpenwelle (11) gekoppelt sind, wenn die Strömungsmaschinenwelle (1) eine Rotationsgeschwindigkeit (V1) erreicht, die größer als die Rotationsgeschwindigkeit (V11) der Pumpenwelle (11).

14. Verfahren nach dem vorstehenden Anspruch, wobei das Luftfahrzeug geeignet ist, ab einer Schwellengeschwindigkeit der Strömungsmaschinenwelle (1) zu fliegen, wobei die Strömungsmaschinenwelle (1) und die Pumpenwelle (11) bei einer diese Schwellengeschwindigkeit unterschreitenden Kopplungsgeschwindigkeit gekoppelt sind.

15. Verfahren nach einem der Ansprüche 11 - 14, wobei die Ankubelphase (PA) und die Startphase (PD) durch einen Takt (TE) voneinander beabstandet sind.

## Claims

1. Turbine engine for aircraft, including a shaft of a turbine engine (1) and a pumping module (100) comprising:
- a structural housing (9) in which are arranged a suction flange (81), in order to draw off fuel from a tank (2), and a delivery flange (82),
- a pump shaft (11) connected to the shaft of the turbine engine (1),
- a pump (3) for supplying fuel to the turbine engine, mounted on said pump shaft (11) and mounted inside the structural housing (9), adapted in order to deliver a flow of fuel as a function of the speed of rotation of the shaft of the turbine engine (1), the supply pump (3) including a first fixed central part (31), joined to the structural housing (9), comprising a hollow delivery shaft connected to the delivery flange (82) and a movable part (32) mounted outside the fixed central part (31) thereof,
- an electrical device (5) which is mounted on said pump shaft (11) and is adapted, according to a first mode of operation, to drive said pump shaft (11) in rotation in order to actuate the supply pump (3) and, according to a second mode of operation, to be driven in rotation by said pump shaft (11) in order to supply electrical power to an equipment (8) of the turbine engine, the electrical device including rotor elements (51) mounted on the external periphery of the movable part (32) of the supply pump (3) and stator elements (52) mounted on the internal periphery of a fixed external crown (83) of the structural housing (9) and
- coupling/decoupling means (7) adapted in order to decouple the shaft of the turbine engine (1) and the pump shaft (11) according to the first mode of operation and in order to couple them according to the second mode of operation.

2. Turbine engine according to Claim 1, wherein the coupling/decoupling means (7) are configured in order to couple the shaft of the turbine engine (1) and the pump shaft (11) when the speed of rotation (V1) of the shaft of the turbine engine (1) is greater than or equal to the speed of rotation (V11) of the pump shaft (11).

3. Turbine engine according to either Claim 1 or Claim 2, wherein the coupling/decoupling means (7) are passive.

4. Turbine engine according to Claim 3, wherein the coupling/decoupling means (7) have the form of a free wheel.

5. Turbine engine according to any of Claims 1 to 4, wherein the turbine engine includes a digital regulator (6) adapted in order to control the mode of operation of the electrical device (5).

6. Turbine engine according to any of Claims 1 to 5, wherein the turbine engine includes electrical equipment (8) connected to the electrical device (5) in order to be supplied by this latter when the shaft of the turbine engine (1) and the pump shaft (11) are coupled.

7. Turbine engine according to any of Claims 1 to 6, wherein the pumping module 100 comprises a power take-off element (84) which is connected to the movable part (32) of the supply pump (3).

8. Turbine engine according to Claim 7, wherein, as the turbine engine includes an accessories box (10) with a shaft, the shaft of the accessories box (10) is connected to the power take-off element (84).

9. Turbine engine according to any of Claims 1 to 8, wherein the supply pump (3) is adapted to draw off fuel from the suction flange (81) towards the delivery flange (82).

10. Turbine engine for helicopter according to any of Claims 1 to 9.

11. Method of supplying fuel to a turbine engine according to any of Claims 1 to 10, in which method:
- previously or simultaneously with a starting phase of the turbine engine (PD), the electrical device (5) drives the pump shaft (11) in rotation in order to actuate the supply pump (3) during a priming phase (PA);
- after starting of the turbine engine, the electrical device (5) is driven in rotation by the pump shaft (11) in order to supply electrical power to equipment of the turbine engine (8).

12. Method according to the preceding claim, wherein the shaft of the turbine engine (1) and the pump shaft (11) are preferably decoupled during starting of the turbine engine and coupled after starting of the turbine engine.

13. Method according to the preceding claim, wherein the shaft of the turbine engine (1) and the pump shaft (11) are coupled when the shaft of the turbine engine (1) reaches a speed of rotation (V1) greater than the speed of rotation (V11) of the pump shaft (11).

14. Method according to the preceding claim, wherein, since the aircraft is capable of flying from a threshold speed of the shaft of the turbine engine (1), the shaft of the turbine engine (1) and the pump shaft (11) are coupled at a coupling speed less than said threshold speed.

15. Method according to any of Claims 11 to 14, wherein the priming phase (PA) and the starting phase (PD) are separated by a time delay (TE).
